# EUROPEAN PATENT APPLICATION

(11) **EP 1 245 156 A2**
(43) Date of publication of application: **02.10.2002**
(21) Application number: 02075887.6
(22) Date of filing: 07.03.2002
(51) Int. Cl.: A23C 15/04, A23C 15/12

(54) **Edible anhydrous fat based systems**

(30) Priority: 26.03.2001 US 816865
(71) Applicant: UNILEVER N.V., 3013 AL Rotterdam (NL); UNILEVER PLC, London EC4P 4BQ (GB)
(72) Inventor: Cain, Frederick, 1521 AZ Wormerveer (NL); McNeill, Gerald Patrick, Channahan, Illinois 60410-5249 (US); Tongue, Tom, Channahan, Illinois 60410-5249 (US)
(74) Representative: Joppe, Hermina L. P.

(57) **Abstract**

The invention concerns with an edible anhydrous fat-based fat system which comprises
from 0% to 2 % by weight of moisture,
from 0 % to 15 % by weight of a natural flavouring agent,
from 25% to 60 % by weight of fat phase,
from 0.5% to 35 % of a structured particulate system having a mean weight diameter of 25 to 500 microns, which comprises one or more active sub-particles with an individual size of 2 to 275 microns, in a matrix material in a weight ratio of 99:1 to 1:99, preferably 80:20 to 20:80, most preferably 60:40 to 40:60.
balance other components selected from the group consisting of flavouring agents, carbohydrates and fillers
and which upon use in a food product results into the occurrence of a refreshing and fizzy oral sensation in the food product.

## Description

Edible anhydrous fat based systems are known from a number of patents. E.g. in US 5 431 945 or US 4 365 643 or US 5 447 735 edible fat based systems are disclosed wherein the systems are flavoured with different flavours while a fat must be present that has the properties of butter fat but which is not butter fat. In later filed, co-pending patent applications (EP applications 00203603.6 and 00203634.1 and in US application 09/627317) other fat compositions are disclosed that also could be applied in such systems. Although most of
the fat systems mentioned lead to good products that upon application in bakery products performed very well nothing is disclosed in this prior art about edible anhydrous fat based systems that give special effects like a fizziness or effervescence or foaming when applied in food products in particular in baked food products. Such effects can be considered as very beneficial as they can be used to create novel taste sensations in the products wherein the fat systems are incorporated.

Therefore we aimed at the development of novel edible anhydrous fat based systems that upon application in food products would demonstrate the effects of fizziness / effervescence and / or foaming. This development led to new products and therefore our invention concerns in the first instance with edible anhydrous fat-based fat systems which comprise
from 0% to 2 % by weight of moisture,
from 0 % to 15 % by weight of a natural flavouring agent,
from 25% to 60 % by weight of fat phase,
from 0.5% to 35 % of a structured particulate system having a mean weight diameter of 25 to 500 microns, which system comprises one or more active sub-particles with an individual size of 2 to 275 microns, in a matrix material in a weight ratio of 99:1 to 1:99, preferably 80:20 to 20:80, most preferably 60:40 to 40:60.
balance other components selected from the group consisting of flavouring agents, carbohydrates and fillers.

Very good effects were observed when the structured particulate system has a loose bulk density between 0.2 and 1.5, preferably between 0.5 and 1.0 kg/l Loose bulk density being measured by measuring the volume of a known mass powder sample, that has passed through a screen into a gradulated cylinder. The procedure is described in USP < 616 < Bulk Density and Tapped Density.

The particle size of the fat based system can vary over a broad range but we found that the best results were obtained if the fat bases system has particles with a size of 0.8 to 20 mm, preferably 2 to 15 mm.
The structured particulate system that is applied in the fat based system preferably has particles with a mean weight diameter of 50 to 400 microns, preferably 60 to 300 microns

The particle size of the active particles can vary over a broad range but here we prefer to use particles with a limited particle size range. In fact we found that the use of active sub-particles having a discrete particle size between 5 and 250 microns, preferably between 7 and 150 microns gave the best results.
Fillers that can be applied are the same fillers as disclosed in the above prior art, e.g. as in EP application 00203603.6.

Fats that can be applied in our new fat based systems are all the fats that are disclosed in above prior art for the known fat based systems. The preferred fats will depend on the end use of the edible anhydrous fat based systems.
The active sub-particles can be selected from all particles that will give the desired effect. We prefer however to use as active particles particles chosen from the group consisting of acids (including citric, malic, tartaric, maleic, lactic, acetic acids or their salts), and bases (including carbonate and bicarbonate salts of calcium, sodium and potassium). These particles are present in the structured particulates as individual particles present in a network of matrix particles and therefore these particles are separated from each other and cannot react together whereas they would react if they were added as individual particles without being part of the network of matrix particles.
The matrix can be selected from materials chosen from the group consisting of polysaccharides, modified polysaccharides, sugars, gums, thickeners, stabilizers, syrups, flours, starches, dextrose, maltodextrin and cellulose

Very good edible anhydrous fat based systems are obtained if this system also comprises 0.5 to 60 wt %, preferably 2 to 35 wt % of a flour, in particular wheat flour or soy flour. In addition to the flour or instead of the flour the system can also comprise 0.5 to 40 wt % of a carbohydrate, preferably a sugar such as glucose, fructose, sucrose or syrups thereof.

The system also can comprise a flavour, preferably in amounts of 0.5 to 10 wt %.This flavour can be any flavour and can be used in any physical form, so it can be liquid, solid but also gaseous. In fact all flavours disclosed in the references discussed above can be used in our novel systems.

The edible anhydrous fat based systems can be applied in many food products Typical examples being: margarine, spreads, low fat spreads, baked goods, extruded goods, confections, ice-cream, dairy products. The use in baked goods however being preferred because in these products the fizziness expresses it at best.

Part of our invention also is a process for providing a refreshing and fizzy oral sensation to a food product, in particular to a bakery product, and more particular to a flavoured bakery product by incorporation in the food product of a fat based system according to the invention

### EXPERIMENTAL PART

### Example 1. Process for Structured Particulate System for Effervescence

Four structured particulate systems were prepared with the formulas listed in Table I. The equipment used for these preparations was a pilot-scale 5 kg fluid-bed drier top spray. The dry ingredients per Table I were placed into a bowl. A spray solution was made by adding the maltodextrin to warm water at 25 °C to give a spray solution with 32% solids. An outlet temperature of 52 °C and air volume sufficient to produce a flow (damper 1/2 open) were used to fluidize the product. The spray solution was sprayed onto the dry mix in the fluid bed at a spray rate of 60 grams per minute with an atomization air pressure of 4.2 bar. Upon completion of the spraying, the structured particulate formed was dried at an outlet air temperature of 60°C for 5 minutes. The structured particulate continued to be dried until a 0.30% max. loss on drying was achieved. The Metler method was used for measuring loss on drying using a Metler LP-16 Metler Moisture Balance. The structured particulate was sized on a US#10 mesh using a Sweco Sifter to remove any oversized material. Further analysis for formulations 1 to 4 are in Table II. The methods used for analyzing the structured particulate are found in USP XXIII/NF19.

**Table I:**

| **Structured Particulate Formulation for Effervescence.** | | | | |
|---|---|---|---|---|
| **Formulations:** **Product Bowl** | **1** | **2** | **3** | **4** |
| ***Sodium Bicarbonate*** | | | | |
| (Grade 1) USP/NF | 2.73kg | 2.46kg | 2.73kg | 2.73kg |
| Citric Acid | | | | |
| (Fine granualar) USP/NF | 2.45kg | 1.36kg | 1.36kg | 1.36kg |
| Tartaric Acid | | | | |
| (Fine granular) NF/FCC | ------ | 1.36kg | 1.09kg | ----- |
| Malic Acid | | | | |
| (Fine Granular) NF/FCC | ------ | ------ | ------ | 1.09kg |

| Spray Solution | | | | |
|---|---|---|---|---|
| Maltodextrin M-100 | 0.27kg | 0.27kg | 0.27kg | 0.27kg |
| Water | 0.57kg | 0.57kg | 0.57kg | 0.57kg |

| Analytical Data **Formulations:** | **1** | **2** | **3** | **4** |
|---|---|---|---|---|
| PS on #20 | 0.0% | 1.2% | 0.4% | 0.4% |
| 40 | 25.7% | 38.7% | 38.0% | 28.2% |
| 60 | 23.4% | 26.0% | 29.1% | 29.8% |
| 80 | 6.3% | 7.7% | 8.5% | 6.6% |
| 100 | 4.2% | 5.6% | 5.8% | 4.4% |
| 200 | 25.5% | 15.0% | 12.8% | 20.2 |
| PAN | 14.9% | 5.9% | 5.4% | 10.4% |
| Loose Bulk | 0.87g/cc | 0.83g/cc | 0.84g/cc | 0.85g/cc |
| Loss on Drying | 0.15% | 0.25% | 0.18% | 0.30% |

Mean weight diameter: Formulation 1, 269 microns; Formulation 2, 284 microns; Formulation 3, 272 microns; Formulation 4, 272 microns.
The active component, (sodium bicarbonate) used had a typical particle size distribution of 2% maximum on US#100 mesh, 50% maximum on US#200 mesh, and 100% on US#325 mesh and loose bulk density of 1.29g/cc. The material had a diameter of 44 microns. The method for analyzing the material can be found in USP XXIII/NF19.
The mean weight diameters were calculated as follows: weight fraction at screen multiplied by screen opening (microns), summed for all screen sizes.

### Example 2. Process for making a flavoured compound particulate system (is detailed in Table II.)

A compound particulate system comprising a structured particulate system which comprised active particles in a matrix material according to the composition of the invention was prepared using formulation 2 in Table II. For comparison, compound particulate systems of the same composition, but without the structured particulate system were prepared according to formulations 1 and 3 in Table II.

In formulation 1, the active particles ("RAMS") was a mixture of 50% Sodium Bicarbonate, 45% Citric Acid, and 5% Maltodextrin M-100 without further processing.
In formulation 2, the structured particulate system was formulation 1 from Table I.
In formulation 3, the active particles ( "Encap") was a mixture of 61.4 % Sodium Bicarbonate 115-70 and 38.6 % Citric Acid 150-85 which were encapsulated in fat using a deposition process.

In formulation 4, the compound particulate system did not contain active particles, by way of a negative control.

**Table II**

| **Formulations:** | **1** | **2** | **3** | **4** |
|---|---|---|---|---|
| Icing Sugar | 311.0g. | 311.0g. | 304.0g. | 348.0g. |
| Granular Sugar | 223.0g. | 223.0g. | 218.0g. | 247.0g. |
| Pastry Flour | 70.0g. | 70.0g. | 68.0g. | 78.0g. |
| Givaudan flavour | 21.0g. | 21.0g. | 21.0g. | 23.0g. |
| Lemon Peel | 5.0g. | 5.0g. | 5.0g. | 6.0g. |
| Fat Blend | 267.0g. | 267.0g. | 261.0g. | 298.0g. |
| Granular Lecithin | 0.2g. | 0.2g. | 0.2g. | 0.2g. |
| Colourant Yellow | 0.1g. | 0.1g. | 0.1g. | 0.1g. |
| RAMS Formulation | 103.0g. | ------ | ----- | ----- |
| Structured Particulate | ------ | 103.0g. | ------ | ----- |
| ENCAP Formulation | ------ | ------ | 123.0g | ----- |

### Method:

1. Icing sugar is blended with granular sugar, pastry flour, Givaudan flavour, Lemon Peel and Colourant Yellow for five minutes on a Hobart C-100 at speed "1".
2. Molten Fat Blend and granular lecithin are added.
3. The blend is mixed at 50 C for ten minutes.
4. The active -particles (RAMS, Structured particulate, ENCAP) are added according to the formulations in Table II.
5. The mixture is agitated at 50 °C for five minutes.
6. The mixture is poured onto chilled parchment lined baking pan and chilled at -18 °C for thirty minutes.
7. The solidified products are stored at room temperature for one hour and cut into squares (1cm x 1cm x 3mm).

### Example 3. Process for making a non flavoured, fat particulate system.

The procedure for preparing a system only containing fat, without the matrix material for comparative purposes is detailed in Table III. Four formulations containing different forms of active particles were prepared.

**Table III**

| **Formulations:** | **1** | **2** | **3** | **4** |
|---|---|---|---|---|
| Fat Blend | 897.0g. | 897.0g. | 877.0g. | 897.0g. |
| RAMS Formulation | 103.0g. | ------ | ------ | ------ |
| Structured Particulate | ------ | 103.0g. | ------ | ------ |
| ENCAP Formulation | ------ | ------ | 123.0g. | ------ |

### Method:

1. Add Fat Blend and melt at 43 °C for five minutes on a Hobart C-100 at speed "1".
2. Formulation active ingredient (RAMS, Structured particulate, ENCAP, Blank) is added.
3. Mixe at 50 °C for five minutes.
4. Mixture is poured onto chilled parchment lined baking pan.
5. Chill at -18 °C. for thirty minutes.
6. Store at room temperature for one hour.
7. Cut into squares (1cm x 1cm x 3mm).

### Example 4. Application and evaluation of compound particulate systems in food products: Cookies

Method for making cookies incorporating flavoured Table II and non flavoured Table III compound particulate system is as follows:
1. Blend 370g pastry flour, 215g granulated sugar, 200g partially hydrogenated vegetable oil shortening, 3.10g of iodized salt, and 2.90g of baking soda.
2. Place in a Hobart mixer (model # N-50) mix for 30 seconds on speed 1, add wet ingredients: 1 50 g whole egg and 21.5g of water. Mix for additional 3 minutes on speed 1.
3. Separate 862.5g of dough into four equal divisions of 215.6g.
4. Add 43.12g of Blank flakes to dough division 1, 43.12g of Encap to dough division 2, 43.12g of compound particulate system to dough division 3, and 43.12g of Rams to dough division 4.
5. Mix each division in a Hobart mixer (model # N-50) at speed 1 for 1 minute.
6. Place 10, 25g dough balls from each division (total of 40) onto parchment lined cookie sheet.
7. Bake in a pre-heated Reed oven (model # 4-20x20) at 165 °C for 15 minutes.
8. Remove from oven and let cool for 30 minutes.

### Oral Sensation Sensory Panel

The following sensory evaluation was carried out to determine the degree of oral sensation (effervescence or foaming) present in the samples. Ten panelists evaluated four cookies with flavoured compound particulate systems and four cookies with unflavoured compound particulate system in a blind sensory test.

Each sample was rated on a scale from 0-10; 0 equals no oral sensation, 5 is moderate oral sensation, and 10 high level of oral sensation. The results of the panel were as follows for the unflavoured compound particulate system (Example 3) in cookies: 100% of the individuals scored all four samples of the cookies as 0 no oral sensation. The results of the panel for the flavoured compound particulate system (Example 2) in cookies were as follows: 60% of the individuals scored formulation 1 (RAMS) as 5 moderate oral sensation although the cookies had a salty unpleasant taste. 70% of the individuals scored formulation 2 (structured particulate) as 7 i.e. above average oral sensation commenting the flavour was enhanced and pleasant. 90% of the individuals scored formulation 3 (ENCAP) and formulation 4 (Blank) as 2 insignificant to no oral sensation. The results indicate that the use of structured particulates in a flavoured compound particulate system heighten oral sensation and flavour whereas the other formulations do not.

### Example 5. Application and evaluation of compound particulate systems in food products: High Moisture Muffins

Method for making the muffins incorporating flavoured Table II compound particulate system formulation 2 and Blank formula 4 is:
1. Blend 140g Muffin Extraordinaire™, 55g salad oil, 98g whole egg, 66g water in a Hobart mixer (model #N-50) for 1 minute on speed 1, and 3 minutes on speed 2.
2. Add another 140g Muffin Extraordinaire™ into the mixture and mix for 1 minute on speed 1 using the Hobart mixer (model # N-50), scrap the bowl and mix an additional 3 minutes on speed setting 1.
3. Separate 500g of mix into two equal divisions of 250g.
4. Add 37.5g of compound particulate system formulation 2 to mix division 1, add 37.5g of Blank formula 4 to mix division 2.
5. Mix each division in a Hobart mixer (model # N-50) at speed 1 for 1 minute.
6. Fill 5, from each division into lined muffin tins (50g mixture per muffin tin).
7. Bake in a pre-heated Reed oven (model # 4-20x20) at 190.5 °C for 30 minutes.
8. Remove from oven and let cool for 30 minutes.

### Evaluation of novel appearance

Inspection: The flavoured compound particulate system formulation 2 and Blank formulation 4 muffins were visually inspected. Upon examination, the flavoured compound particulate system formulation 2 muffins were found to have moved to the surface of the muffin creating a flavoured surface, whereas the Blank formula created small flavoured pockets and no change to the surface of the muffin.

### Example 6. Application and evaluation of compound particulate systems in food products: Low Moisture Muffins

Method for making muffins incorporating flavoured Table II compound particulate system formulation 2 and Blank formulation 4 is
1. Blend 154.5g Bisquick™ original, 67.5g sugar, 101g whole milk, 29.5g salad oil, 49g whole egg in a Hobart mixer (model #N-50) for 1 minute on speed 1, 3 minutes on speed 2.
2. Add another 154.5g Bisquick™ original into the mixture and mix for 1 minute on speed 1 using the Hobart mixer (model # N-50), scrap the bowl and mix an additional 3 minutes on speed setting 1.
3. Separate 556g of mix into two equal divisions of 278g.
4. Add 42g of compound particulate system formulation 2 to mix division 1, add 42g of Blank formulation 4 to mix division 2.
5. Mix each division in a Hobart mixer (model # N-50) at speed 1 for 1 minute.
6. Fill 5, from each division into lined muffin tins (50g mixture per muffin tin).
7. Bake in a pre-heated Reed oven (model # 4-20x20) at 204. °C for 15-18 minutes.
8. Remove from oven and let cool for 30 minutes.

### Evaluation of novel appearance

Inspection: The flavoured compound particulate system formulation 2 and Blank formulation 4 muffins were visually inspected. Upon examination, the flavoured compound particulate system formulation 2 muffins were found to have created large flavoured pockets and some moved to the surface of the muffin creating a flavoured surface, whereas the Blank formula created small flavoured pockets.

### Example 7. Process for making a flavoured compound particulate system (is detailed in Table IV).

A compound particulate system comprising a structured particulate system which comprised active-particles in a matrix material according to the composition of the invention was prepared using formulation 2 in Table IV. For comparison, compound particulate systems of the same composition, but without the structured particulate system were prepared according to formulations 1 Table IV.

In formulation 1, the active particles ( "RAMS") were a mixture of 50% Sodium Bicarbonate, 25% Citric Acid, 20% Malic Acid, and 5% Maltodextrin M-100 without further processing.
In formulation 2, the structured particulate was formulation 4 in Table I.
In formulation 3, the compound particulate system did not contain active sub-particles, by way of a negative control.

**Table IV**

| **Formulations:** | **1** | **2** | **3** |
|---|---|---|---|
| Icing Sugar | 284.0g. | 284.0g. | 317.9g. |
| Granular Sugar | 159.9g. | 159.9g. | 178.7g. |
| Pastry Flour | 159.9g. | 159.9g. | 178.7g. |
| Fat Blend | 273.0g. | 273.0g. | 305.2g. |
| N&A Strawberry Flavour | 8.1g. | 8.1g. | 9.1g. |
| Tricalcium Phosphate | 2.7g. | 2.7g. | 3.0g. |
| Sodium Citrate Dihydrate | 2.5g. | 2.5g. | 2.8g. |
| Carmel Colour | 2.5g. | 2.5g. | 2.5g. |
| Lecithin | 0.4g. | 0.4g. | 0.4g. |
| FD&C Red #40 Lake | 1.0g. | 1.0g. | 1.1g. |
| FD&C Blue #2 Lake | 0.2g. | 0.2g. | 0.2g. |
| RAMS Formulation | 105.3g. | ------ | ----- |
| Structured Particulate | ------ | 105.3g. | ------ |
| ENCAP Formulation | ------ | ------ | ------ |

### Method:

1. Icing sugar is blended with granular sugar, pastry flour, N&A Strawberry flavour, tricalcium phosphate, sodium citrate dihydrate, carmel colour, FD&C Red#40 Lake, and FD&C Blue #2 Lake for five minutes on a Hobart C-100 at speed "1".
2. Molten Fat Blend and granular lecithin are added.
3. The blend is mixed at 50 °C for ten minutes.
4. The active particles (RAMS, Structured particulate) are added according to the formulations in Table IV.
5. The mixture is agitated at 50 °C for five minutes.
6. The mixture is poured onto chilled parchment lined -18 °C for thirty minutes.
7. The solidified products are stored at room temperature for one hour and cut into squares (1cm x 1cm x 3mm).

### Example 8. Process for making a non flavoured, fat particulate system

The procedure for preparing a system only containing fat, without the matrix material, for comparitive purposes is detailed in Table IV. Three formulations containing different forms of active sub-particles were prepared.

**Table V**

| **Formulations:** | **1** | **2** | **3** |
|---|---|---|---|
| Fat Blend | 897.0g. | 897.0g. | 877.0g. |
| RAMS Formulation | 105.3g. | ------ | ------ |
| Structured Particulate | ------ | 105.3g. | ------ |

### Method:

1. Add Fat Blend and melt at 43 °C for five minutes on a Hobart C-100 at speed "1".
2. Formulation active ingredient (RAMS, Structured particulate) is added.
3. Mixe at 50 C. for five minutes.
4. Mixture is poured onto chilled parchment lined baking pan.and
5. Chill at -18 °C. for thirty minutes.and
6. Store at room temperature for one hour.and
7. Cut into squares (1cm x 1cm x 3mm).

### Example 9. Application and evaluation of compound particulate systems in: Cookies

Method for making cookies incorporating flavoured Table IV and non flavoured Table V compound particulate system is as follows:
1. Blend 370g pastry flour, 215g granulated sugar, 200g partially hydrogenated vegetable oil shortening, 3.10g of iodized salt, and 2.90g of baking soda.
2. Place in a Hobart mixer (model # N-50) mixe for 30 seconds on speed 1, then add wet ingredients: 1 50g whole egg and 21.5g of water. Mix for another 3 minutes speed 1.
3. Separate 862.5g of dough into three equal divisions of 287.5g.
4. Add 57.5g of Blank flakes to dough division 1, 57.5g of compound particulate system to dough division 2, and 43.12g of Rams to dough division 3.
5. Mixe each division in a Hobart mixer (model # N-50) at speed 1 for 1 minute.
6. Place 10, 25g dough balls from each division (total of 30) onto parchment lined cookie sheet.
7. Bake in a pre-heated Reed oven (model # 4-20x20) at 165 °C for 15 minutes.
8. Remove from oven and let cool for 30 minutes.
Repeat procedure for added fat particulate system ingredients from Table V in Step 4.

### Oral Sensation Sensory Panel

The following sensory evaluation was carried out to determine the degree of oral sensation (effervescence or foaming) present in the samples. Ten panelists evaluated three cookies with flavoured compound particulate systems and three cookies with unflavoured fat particulate system in a blind sensory test. Each sample was rated on a scale from 0-10; 0 equals no oral sensation, 5 is moderate oral sensation, and 10 high level of oral sensation. The results of the panel were as follows for the unflavoured fat particulate system (Example 8) in cookies: 100% of the individuals scored all three samples of the cookies as 0 no oral sensation. The results of the panel were as follows for the flavoured compound particulate system (Example 7) in cookies: 50% of the individuals scored formulation 1 (RAMS) as 5 moderate oral sensation although the cookies had a salty sour unpleasant taste. 70% of the individuals scored formulation 2 (structured particulate) as 7 i.e. above average oral sensation commenting the flavour was enhanced and pleasant. Formulation 3 (Blank) as 2 insignificant to no oral sensation. The results indicate that the structured particulate in a flavoured compound particulate system heighten the oral sensation and flavour whereas the other formulations do not.

### Example 10. Application and evaluation of compound particulate systems in High Moisture Muffins

Method for making muffins incorporating flavoured Table IV compound particulate system formulation 2 and Blank formulation 3 is:
1. Blend 140g Muffin Extraordinaire™, 55g salad oil, 98g whole egg, 66g water in a Hobart mixer (model #N-50) for 1 minute on speed 1, 3 minutes on speed 2.
2. Add another 140g Muffin Extraordinaire™ into the mixture and mix for 1 minute on speed 1 using the Hobart mixer (model # N-50), scrap the bowl and mix an additional 3 minutes on speed setting 1.
3. Separate 500g of mix into two equal divisions of 250g.
4. Add 37.5g of compound particulate system formulation 2 to mix division 1, add 37.5g of Blank formulation 4 to mix division 2.
5. Mixe each division in a Hobart mixer (model # N-50) at speed 1 for 1 minute.
6. Fill 5, from each division into lined muffin tins (50g mixture per muffin tin).
7. Bake in a pre-heated Reed oven (model # 4-20x20) at 190 °C for 30 minutes.
8. Remove from oven and let cool for 30 minutes.

### Evaluation of novel appearance

Inspection: The flavoured compound particulate system formulation 2 and Blank formulation 3 muffins were visually inspected. Upon examination, the flavoured compound particulate system formulation 2 muffins were found to have moved to the surface (top) of the muffin creating a red coloured and strawberry flavoured surface, whereas the Blank formula created small red coloured and flavoured pockets inside the muffin and no change to the surface of the muffin.

### Example 11. Application and evaluation of compound particulate systems in Low Moisture Muffins

Method for making muffins incorporating flavoured Table IV compound particulate system formulation 2 and Blank formulation 3 is:
1. Blend 154.5g Bisquick™ original, 67.5g sugar, 101g whole milk, 29.5g salad oil, 49g whole egg in a Hobart mixer (model #N-50) and mix for 1 minute on speed 1, and 3 minutes on speed 2.
2. Add another 154.5g Bisquick™ original into the mixture and mix for 1 minute on speed 1 using the Hobart mixer (model # N-50), scrap the bowl and mix an additional 3 minutes on speed setting 1.
3. Separate 556g of mix into two equal divisions of 278g.
4. Add 42g of compound particulate system formulation 2 to mix division 1, add 42g of Blank formulation 4 to mix division 2.
5. Mixe each division in a Hobart mixer (model # N-50) at speed 1 for 1 minute.
6. Fill 5, from each division into lined muffin tins (50g mixture per muffin tin).
7. Bake in a pre-heated Reed oven (model # 4-20x20) at 204 °C for 15-18 minutes.
8. Remove from oven and let cool for 30 minutes.

### Evaluation of novel appearance

Inspection: The flavoured compound particulate system formulation 2 and Blank formulation 4 muffins were visually inspected. Upon examination, the flavoured compound particulate system formula 2 muffins were found to have created large red coloured and strawberry flavoured pockets and some moved to the surface of the muffin creating a red coloured and strawberry flavoured surface, whereas the Blank formulation created small coloured and flavoured pockets.

## Claims

1. An edible anhydrous fat-based fat system which comprises
from 0% to 2 % by weight of moisture,
from 0 % to 15 % by weight of a natural flavouring agent,
from 25% to 60 % by weight of fat phase,
from 0.5% to 35 % of a structured particulate system having a mean weight diameter of 25 to 500 microns, which comprises one or more active sub-particles with an individual size of 2 to 275 microns, in a matrix material in a weight ratio of 99:1 to 1:99, preferably 80:20 to 20:80, most preferably 60:40 to 40:60.
balance other components selected from the group consisting of flavouring agents, carbohydrates and fillers.

2. Edible fat based system according to claim 1 wherein the structured particulate system has a loose bulk density between 0.2 and 1.5, preferably between 0.5 and 1.0 kg/l.

3. Edible fat based system according to claims 1 and 2 wherein the fat based system has particles with a size of 0.8 to 20 mm, preferably 2 to 15 mm.

4. Edible fat based system according to claims 1 to 3 wherein the structured particulate system has particles with a mean weight diameter of 50 to 400 microns, preferably 60 to 300 microns.

5. Edible fat based system according to claims 1 to 4 wherein the active sub-particles have a discrete particle size between 5 and 250 microns, preferably between 7 and 150 microns.

6. Edible fat based system according to claims 1 to 5 wherein the active sub-particles are chosen from the group consisting of acids (including citric, malic, tartaric, maleic, lactic, acetic acids or their salts),and bases (including carbonate and bicarbonate salts of calcium, sodium and potassium).

7. Edible fat based system according to claims 1 to 6 wherein the matrix material is chosen from the group consisting of polysaccharides, modified polysaccharides, sugars, gums, thickeners, stabilizers, syrups, flours, starches, dextrose, maltodextrin and cellulose.

8. Edible fat based system according to claims 1 to 7 wherein the system also comprises 0.5 to 60 wt % of a flour.

9. Edible fat based system according to claims 1 to 8 wherein the system also comprises 0.5 to 40 wt % of a carbohydrate, preferably a sugar.

10. Edible fat based system according to claims 1 to 9 wherein the system comprises 0.5 to 10 wt % of flavours.

11. Food products including margarine, spreads, low fat spreads, baked goods, extruded goods, confections, ice-cream, dairy products comprising the fat based system according to claims 1 to 10.

12. Process for providing a refreshing and fizzy oral sensation to a food product, in particular a bakery product, wherein a fat based system according to claims 1 to 10 is incorporated in the food product.
